# EUROPÄISCHE PATENTSCHRIFT

(11) **EP 1 436 161 B1**
(45) Veröffentlichungstag und Bekanntmachung des Hinweises auf die Patenterteilung: **16.11.2005**
(21) Anmeldenummer: 02774381.4
(22) Anmeldetag: 17.09.2002
(51) Int. Cl.: B60K 41/00

(54) **GESCHWINDIGKEITSREGLER MIT ABSTANDSREGELFUNKTION**
SPEED REGULATOR WITH DISTANCE REGULATING FUNCTION
REGULATEUR DE VITESSE A FONCTION DE REGULATION DE DISTANCE

(30) Priorität: 05.10.2001 DE 10149146
(43) Veröffentlichungstag der Anmeldung: 14.07.2004
(73) Patentinhaber: ROBERT BOSCH GMBH, 70442 Stuttgart (DE)
(72) Erfinder: WAGNER, Klaus-Peter, 71263 Weil Der Stadt (DE); WINNER, Hermann, 76467 Bietigheim (DE)
(86) Internationale Anmeldenummer: PCT/DE2002/003486
(87) Internationale Veröffentlichungsnummer: WO 2003/031217

(56) Entgegenhaltungen:
- EP-A- 0 657 857
- DE-A- 19 650 168
- DE-A- 19 833 065

## Beschreibung

### Stand der Technik

Die Erfindung betrifft einen Geschwindigkeitsregler mit Abstandsregelfunktion für Kraftfahrzeuge, mit einem Ortungssystem zur.Erfassung von Ortungsdaten für Objekte, die sich vor dem Fahrzeug befinden, und mit einer Auswerteeinrichtung zur Entscheidung, ob ein geortetes Objekt als relevantes Zielobjekt auf der eigenen Fahrspur zu behandeln ist.

Für Kraftfahrzeuge sind Abstands- und Geschwindigkeitsregler bekannt, die auch als ACC-Systeme ("Adaptive Cruise Control") bezeichnet werden. Bei diesen Systemen werden Objekte, beispielsweise vorausfahrende Fahrzeuge, die sich auf der von dem eigenen Fahrzeug befahrenen Fahrspur befinden, mit Hilfe eines Ortungssystems erfaßt. Bei dem Ortungssystem kann es sich um ein Kamerasystem oder um ein Radarsystem handeln, mit dem der Abstand und die Relativgeschwindigkeit des vorausfahrenden Fahrzeugs gemessen werden können. Mit Hilfe eines richtungssensitiven Radarsystems oder durch Zuhilfenahme zusätzlicher Parameter, beispielsweise des Lenkradeinschlags des eigenen Fahrzeugs, lassen sich die erfaßten Objekte auf ihre Plausibilität überprüfen, so daß beispielsweise Fahrzeuge auf der eigenen Spur von Verkehrsschildern oder Markierungen am Fahrbahnrad oder von Fahrzeugen auf anderen Spuren unterschieden werden können. Wenn sich ein vorausfahrendes Fahrzeug auf der eigenen Spur im Ortungsbereich des Radars befindet, wird die Fahrgeschwindigkeit durch Eingriff in das Antriebs- und Bremssystem des Fahrzeugs so geregelt, daß ein geschwindigkeitsabhängiger Sicherheitsabstand zum vorausfahrenden Fahrzeug eingehalten wird. Befindet sich dagegen kein Fahrzeug im Ortungsbereich auf der eigenen Spur, so erfolgt eine Regelung auf eine vom Fahrer gewünschte, mit Hilfe eines Set-Befehls eingegebene Geschwindigkeit. Ein Beispiel eines solchen Regelsystems wird beschrieben in "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26.-29. Februar 1996.

DE 196 50 168 offenbart ein weiteres Beispiel eines ACC-Systems gemäß dem Oberbegriff des Anspruchs 1.

Bisher werden solche ACC-Systeme generell in relativ stabilen Verkehrssituationen eingesetzt, die durch verhältnismäßig hohe Fahrzeuggeschwindigkeiten und entsprechend große Fahrzeugabstände gekennzeichnet sind, insbesondere bei Fahrten auf Autobahnen oder Schnellstraßen. Wenn beispielsweise bei einem Verkehrsstau das als Zielobjekt verfolgte Fahrzeug in den Stand bremst und dementsprechend auch die Geschwindigkeit des eigenen Fahrzeugs heruntergeregelt wird, so schaltet sich der Geschwindigkeitsregler bei einer bestimmten Grenzgeschwindigkeit, die in der Größenordnung von etwa 20 km/h liegt, selbsttätig ab, und es ergeht eine akustische Aufforderung an den Fahrer, die Kontrolle über das Fahrzeug zu übernehmen und das Fahrzeug selbst in den Stand abzubremsen. Der Grund für diese Abschaltung besteht vor allem darin, daß der Detektionsbereich des Ortungssystems im Nahbereich Lücken aufweist, so daß mit abnehmenden Abständen der Zielobjekte die Gefahr zunimmt, daß ein Hindernis auch dann nicht erfaßt und berücksichtigt wird, wenn es sich auf der eigenen Fahrspur befindet.

Beispielsweise ist bei Radarsystemen der Detektionsbereich durch die Geometrie der Radarkeule begrenzt, die divergent vom Radarsensor ausgeht und nur einen begrenzten Winkelbereich überstreicht, so daß erst in einem gewissen Abstand vor dem Fahrzeug die volle Breite der eigenen Fahrspur erfaßt werden kann. Ähnliche "tote Winkel" können auch bei Kamerasystemen oder anderen bekannten Ortungssystemen auftreten.

### Aufgabe, Lösung und Vorteile der Erfindung

Aufgabe der Erfindung ist es, einen Geschwindigkeitsregler der eingangs genannten Art anzugeben, der eine Erweiterung des Anwendungsbereichs der Regelfunktion zu niedrigen Geschwindigkeiten ermöglicht, ohne daß überzogene Anforderungen an den Detektionsbereich des Ortungssystems gestellt werden müssen.

Diese Aufgabe wird erfindungsgemäß gelöst, durch ein Überwachungsmodul, das dazu ausgebildet ist, anhand der Ortungsdaten eine Situation zu erkennen, in der die Gefahr besteht, daß sich von dem Ortungssystem nicht erfaßte Objekte im Nahbereich befinden, und in dieser Situation eine Übernahmeaufforderung an den Fahrer auszugeben.

Die Erfindung beruht auf der Überlegung, daß es in der Mehrzahl der Fälle, in denen während des Betriebs des Geschwindigkeitsreglers eine Verringerung der Geschwindigkeit auf sehr niedrige Werte und ggf. bis zum Stillstand erfolgt, trotz der Lücken im Detektionsbereich sehr wohl möglich ist, eine sichere Abstandsregelung bis zum Stillstand des eigenen Fahrzeugs durchzuführen. In den meisten Fällen wird nämlich das Fahrzeug, das als Zielobjekt für die Abstandsregelung ausgewählt ist, ständig im Detektionsbereich verbleiben, bis beide Fahrzeuge in den Stand abgebremst sind. In diesen Fällen besteht auch bei Unterschreitung der bisher geltenden Grenzgeschwindigkeit keine Notwendigkeit, den Geschwindigkeitsregler abzuschalten und den Fahrer zur Übernahme aufzufordern. Besondere Vorkehrungen sind lediglich für die vergleichsweise seltenen Ausnahmefälle erforderlich, in denen das verfolgte Zielobjekt während der Verringerung der Geschwindigkeit und der damit einhergehenden Verringerung des Abstands aus dem Detektionsbereich verschwindet, beispielsweise, weil die beiden Fahrzeuge innerhalb derselben Fahrspur relativ weit seitlich gegeneinander versetzt fahren, so daß das vorausfahrende Fahrzeug mit abnehmendem Abstand in den toten Winkel des Radarsystems gerät. Diese besonderen Situationen, die eine Übernahmeaufforderung an den Fahrer erforderlich machen, lassen sich jedoch mit hoher Sicherheit anhand der Vorgeschichte, d.h., anhand der unmittelbar vor dem Verlust des Zielobjektes erfaßten Ortungsdaten, erkennen. Daher ist es möglich, die Übernahmeaufforderung auf diese besonderen Fälle zu beschränken.

Die so erreichte Ausdehnung des Anwendungsbereichs des Geschwindigkeitsreglers führt nicht nur zu einer beträchtlichen Steigerung des Komforts für den Fahrer, sondern trägt auch zur Steigerung der Verkehrssicherheit bei, da der Fahrer beim Auffahren auf ein Stauende entlastet wird und somit seine Aufmerksamkeit verstärkt dem Geschehen auf den Nachbarspuren widmen kann, so daß er beispielsweise früher erkennen kann, wenn ein Fahrer eines Fahrzeugs auf der Nachbarspur beabsichtigt, die Spur zu wechseln und sich in den Sicherheitsabstand zwischen dem eigenen Fahrzeug und dem vorausfahrenden Fahrzeug hineinzudrängen.

Durch die Vermeidung unnötiger Übernahmeaufforderungen wird auch die Gefahr verringert, daß der Fahrer im Fall einer solchen Übernahmeaufforderung durch eine Überreaktion, etwa durch zu heftiges Bremsen, den Nachfolgeverkehr irritiert.
Durch die Fortsetzung der automatischen Regelung auch bei sehr niedriger Geschwindigkeit kann außerdem auch in diesem Geschwindigkeitsbereich der Vorteil ausgenutzt werden, daß das Ortungssystem Änderungen des Abstands und der Relativgeschwindigkeit des vorausfahrenden Fahrzeugs wesentlich genauer und früher erkennen kann als der Fahrer selbst, so daß eine schnellere und angemessenere Reaktion auf Änderungen des Brems- oder Beschleunigungsverhaltens des vorausfahrenden Fahrzeugs ermöglicht wird.

Es ist auch bereits vorgeschlagen worden, die bekannten ACC-Systeme durch eine sogenannte Stop & Go- oder Stop & Roll-Funktion zu ergänzen, mit der bei einem Verkehrsstau oder bei zähfließendem Verkehr nicht nur das automatische Bremsen in den Stand, sondern auch das Wiederanfahren und das langsame Rollen im Stau automatisiert wird. Auch im Rahmen dieser Funktionen, die beispielsweise auch im innerstädtischen Verkehr eingesetzt werden können, erweist sich die erfindungsgemäße Ausgestaltung des Geschwindigkeitsreglers als besonders vorteilhaft.

Übernahmeaufforderungen an den Fahrer, beispielsweise in der Form eines akustischen und/oder optischen Signals können in einem ACC-System oder auch im Rahmen der Stop & Go-Funktion auch in anderen Situationen auftreten. In einem ACC-System ist normalerweise der Betrag der Fahrzeugverzögerung, die mit dem automatischen Eingriff in das Antriebs- oder Bremssystems des Fahrzeugs erreichbar ist, auf solche Werte beschränkt, die nicht zu einer wesentlichen Beeinträchtigung des Komforts oder zu einer Irritation des Nachfolgeverkehrs führen. Wenn das System erkennt, daß die so erreichbare Verzögerung nicht ausreicht, eine Kollision mit dem vorausfahrenden Fahrzeug zu vermeiden, ergeht auch bei bekannten Systemen bereits eine Übernahmeaufforderung. Die Übernahmeaufforderung im Falle der Erfindung hat vorzugsweise dieselbe Form wie in diesen bekannten Fällen, so daß der Fahrer nicht durch eine Vielfalt unterschiedlicher Meldungen irritiert wird, sondern ihm die Beherrschung des Systems durch eine harmonisierte, leicht zu interpretierende und vertraut wirkende Schnittstelle zwischen Mensch und Maschine erleichtert wird.

Vorteilhafte Ausgestaltungen der Erfindung ergeben sich aus den Unteransprüchen.

Auch wenn das bisher verfolgte Zielobjekt verlorengeht, nachdem das eigene Fahrzeug die Grenzgeschwindigkeit von 20 km/h unterschritten hat, bedeutet dies nicht notwendigerweise, daß eine Übernahmeaufforderung an den Fahrer ergehen muß. Beispielsweise kann der Verlust des Zielobjektes einfach darauf beruhen, daß das unmittelbar vorausfahrende Fahrzeug die Spur gewechselt hat. Auch diese Situation läßt sich anhand der erfaßten Ortungsdaten erkennen, so daß auch in diesem Fall die automatische Regelung fortgesetzt werden kann, ggf. mit Auswahl des bisher als übernächstes Fahrzeug vorausfahrenden Fahrzeugs als neues Zielobjekt.

Bei der Unterscheidung zwischen einem Spurwechsel des vorausfahrenden Fahrzeugs und einem Verlust des Zielobjektes, der eine Übernahmeaufforderung erfordert, kann auf bekannte Funktionen zurückgegriffen werden, die schon in bestehenden ACC-Systemen implementiert sind. Beispielsweise ist es bei ACC-Systemen mit richtungssensitivem Radar üblich, daß in der Auswerteeinrichtung aus den Richtungs- und Abstandsdaten des Zielobjektes der Querversatz dieses Zielobjekts relativ zu der augenblicklichen Geradeaus-Richtung des eigenen Fahrzeugs berechnet wird. Durch Verfolgen des zeitlichen Verlaufs der zyklisch aufeinanderfolgenden Querversatzmessungen ist es möglich zu entscheiden, ob das vorausfahrende Fahrzeug einen Spurwechsel vorgenommen hat oder nicht. Ergänzend können dabei erforderlichenfalls auch Daten herangezogen werden, die Information über Richtungsänderungen des eigenen Fahrzeugs enthalten, beispielsweise der Lenkradeinschlag oder die gemessene Giergeschwindigkeit oder Gierbeschleunigung.

Wenn ein Fahrzeug mit einem elektronischen Stabilitätsprogramm (ESP) zur Steuerung des dynamischen Verhaltens ausgerüstet ist, so weist das Fahrzeug ohnehin einen Gierbeschleunigungs- oder Giergeschwindigkeitssensor auf. Die Daten dieses Sensors können dann auch von dem Geschwindigkeitsregler benutzt werden, um Richtungsänderungen des eigenen Fahrzeugs zu erkennen und zu quantifizieren. Insbesondere läßt sich aus der Giergeschwindigkeit in Verbindung mit der gemessenen Fahrgeschwindigkeit der augenblickliche Kurvenradius des eigenen Fahrzeugs errechnen. Bei bekannten ACC-Systemen werden diese Informationen dazu benutzt, die voraussichtliche Geometrie des von dem eigenen Fahrzeug befahrenen Fahrschlauches vorherzusagen, so daß dann in Verbindung mit den Querversatzmessungen auch bei gekrümmtem Fahrbahnverlauf entschieden werden kann, ob sich das Zielobjekt auf der eigenen Spur oder einer Nachbarspur befindet. Ebenso ist es mit Hilfe dieser Daten auch möglich, einen Spurwechsel des eigenen Fahrzeugs zu erkennen. Dazu kann beispielsweise die mit dem Giergeschwindigkeitssensor gemessene Richtungsänderung des eigenen Fahrzeugs mit den Änderungen der Azimutwinkel eines oder vorzugsweise mehrerer georteter Objekte verglichen werden.

Wenn bei niedriger Geschwindigkeit (unterhalb von 20 km/h) ein Spurwechsel des eigenen Fahrzeugs erkannt wird, so deutet dies darauf hin, daß der Fahrer ohnehin beabsichtigt, selbst die Kontrolle zu übernehmen. Dennoch kann es aus Sicherheitsgründen zweckmäßig sein, auch in diesem Fall die Übernahmeaufforderung auszugeben.

Im Rahmen der Plausibilitätsauswertung, zur Entscheidung, ob sich das Zielobjekt auf der eigenen Fahrspur oder einer Nachbarspur befindet, werden bei einigen bekannten ACC-Systemen zwei Bewertungszahlen Pi und Pa berechnet, die jeweils die Wahrscheinlichkeit dafür angeben, daß sich das Zielobjekt innerhalb (Pi) oder außerhalb (Pa) des eigenen Fahrschlauches befindet. Diese Bewertungszahlen werden in Abhängigkeit von den zyklisch erfaßten Ortungsdaten fortlaufend aktualisiert, wobei zumeist in Form von gleitenden Mittelwerten auch die Vorgeschichte berücksichtigt wird. Wenn sich das Zielobjekt längere Zeit im eigenen Fahrschlauch befunden hat, ist dies daher an einem hohen Wert für Pi und einem niedrigen Wert für Pa zu erkennen. Wenn dann das Zielobjekt plötzlich verlorengeht, so deutet dies darauf hin, daß sich das Zielobjekt immer noch im eigenen Fahrschlauch befindet und nur deshalb nicht mehr erfaßt wird, weil es sich im toten Winkel der Radarkeule befindet. In diesem Fall wird folglich die Übernahmeaufforderung ausgegeben werden. Wenn dagegen das vorausfahrende Fahrzeug einen Spurwechsel vornimmt, so nimmt im Laufe dieses Spurwechsels Pi ab und Pa zu, so daß sich die Differenz zwischen diesen Bewertungszahlen verringert. Wenn diese Differenz in dem Augenblick, in dem das Zielobjekt verlorengeht, unterhalb eines bestimmten Schwellenwertes liegt, kann daher angenommen werden, daß das Zielobjekt den eigenen Fahrschlauch verlassen hat, und die Geschwindigkeitsregelung kann fortgesetzt werden, ohne daß eine Übernahmeaufforderung ergeht.

Die Gefahr, daß ein Zielobjekt aus dem Detektionsbereich verschwindet, obwohl es sich noch auf dem eigenen Fahrschlauch befindet, ist naturgemäß dann besonders groß, wenn eine Kurve durchfahren wird. Vor allem wenn das Zielobjekt am in Bezug auf die Kurve äußeren Rand des Detektionsbereiches geortet wird, ist zu erwarten, daß dieses Zielobjekt verlorengeht, wenn sich der Abstand zum Zielobjekt weiter verringert und/oder wenn die fahrzeuge wieder aus der Kurve ausfahren. In diesem Fall kann es zweckmäßig sein, präventiv eine Übernahmeaufforderung auszugeben, schon bevor das Zielobjekt tatsächlich den Detektionsbereich verläßt.

Je enger die durchfahrene Kurve ist, desto größer wird im allgemeinen der im Nahbereich liegende Teil des eigenen Fahrschlauches sein, der nicht mehr vom Ortungssystem erfaßt werden kann. Wenn der aus Giergeschwindigkeit und Fahrgeschwindigkeit berechnete augenblickliche Kurvenradius des eigenen Fahrzeugs unterhalb eines bestimmten Wertes liegt, kann es daher zweckmäßig sein, eine Übernahmeaufforderung auch dann auszugeben, wenn sich kein Zielobjekt im Detektionsbereich befindet, beispielsweise weil das bisher verfolgte Fahrzeug kurz vorher auf eine andere Spur gewechselt hat.

Im folgenden wird ein Ausführungsbeispiel der Erfindung anhand der Zeichnung näher erläutert.

### Zeichnung

Es zeigen:
- Fig. 1: ein Blockdiagramm eines ACC-Systems;
- Fig, 2: ein Diagramm eines Detektionsbereiches eines Ortungssystems eines mit dem ACC-System ausgestatteten Fahrzeugs;
- Fig. 3: Beispiele für den Verlust eines Zielobjektes aus dem Ortungsbereich beim Durchfahren einer Kurve; und
- Fig. 4: ein Flußdiagramm eines Überwachungsroutine, die in dem erfindungsgemäßen ACC-System implementiert ist.

### Beschreibung der bevorzugten Ausführungsform

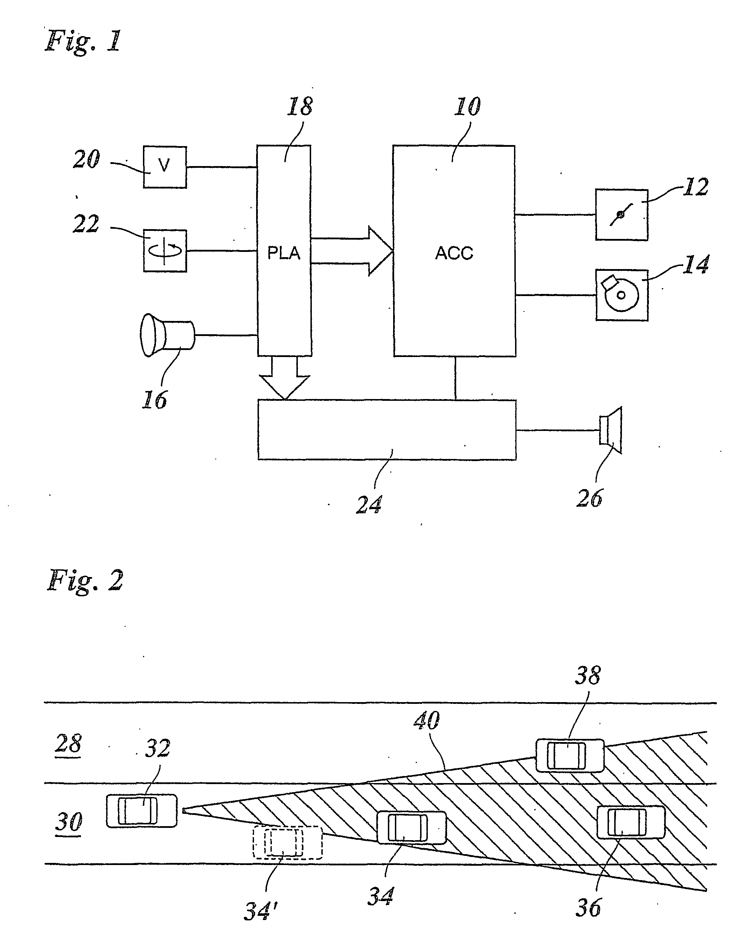

Da der Aufbau und die Wirkungsweise eines Geschwindigkeitsreglers oder ACC- (Adaptive Cruise Control) Systems für Kraftfahrzeuge als solche bekannt sind, zeigt Figur 1 lediglich die wichtigsten Komponenten eines solchen Systems in einem vereinfachten Blockdiagramm. Kernstück des Systems ist ein ACC-Modul 10, das in das Antriebssystem 12 und das Bremssystem 14 des Kraftfahrzeugs eingreift und, sofern die Fahrbahn frei ist, die Fahrgeschwindigkeit auf eine vom Fahrer eingestellte Wunschgeschwindigkeit regelt. Ein Ortungssystem 16, im gezeigten Beispiel in der Form eines vorn am Fahrzeug montierten richtungsselektiven Mehrstrahlradars, mißt die Abstände und Relativgeschwindigkeiten der vorausfahrenden Fahrzeuge und auch der Standziele, die sich im Detektionsbereich des Radars befinden. Außerdem mißt das Ortungssystem auch die Azimutwinkel der erfaßten Objekte relativ zur augenblicklichen Geradeaus-Richtung des Fahrzeugs. Die vom Ortungssystem 16 gemessenen Ortungsdaten aller erfaßten Objekte werden an eine Auswerteeinrichtung 18 übermittelt und dort einer Plausibilitätsauswertung unterzogen, um für jedes erfaßte Objekt festzustellen, ob es sich um ein unbewegliches Standziel, beispielsweise ein Verkehrsschild am Straßenrand, um entgegenkommende Fahrzeuge auf der Gegenfahrbahn oder um vorausfahrende Fahrzeuge handelt. Bei vorausfahrenden Fahrzeugen wird außerdem unterschieden, ob sie die eigene Fahrspur oder eine Nachbarspur befahren. Sofern sich mindestens ein vorausfahrendes Fahrzeug auf der eigenen Spur befindet, wählt die Auswerteeinrichtung 18 das unmittelbar vorausfahrende Fahrzeug, also das mit dem kleinsten Abstand, als Zielobjekt aus.

Für die Plausibilitätsauswertung erhält die Auswerteeinrichtung 18 außerdem das Signal eines Geschwindigkeitssensors 20, der die Fahrzeuggeschwindigkeit des eigenen Fahrzeugs mißt, und das Ausgangssignal eines Giergeschwindigkeitssensors 22, das die augenblickliche Giergeschwindigkeit des eigenen Fahrzeugs angibt. Standziele und entgegenkommende Fahrzeuge können durch Vergleich der vom Ortungssystem 16 gemessenen positiven oder negativen Relativgeschwindigkeit mit der vom Geschwindigkeitssensor 20 gemessenen Fahrgeschwindigkeit des eigenen Fahrzeugs identifiziert werden. Aus den gemessenen Abstandsdaten und Azimutwinkeln errechnet die Auswerteeinrichtung 18 mit Hilfe trigonometrischer Funktionen für jedes erfaßte Objekt einen Querversatz in der Richtung rechtwinklig zur augenblicklichen Fahrrichtung des eigenen Fahrzeugs. Durch Vergleich dieses Querversatzes mit der bekannten typischen Breite einer Fahrspur läßt sich (zumindest bei geradem Fahrbahnverlauf) entscheiden, ob sich das erfaßte Objekt innerhalb oder außerhalb der eigenen Fahrspur befindet.

Da jedoch im allgemeinen der Querversatz des eigenen Fahrzeugs relativ zur Mitte der eigenen Fahrspur nicht genau bekannt ist, sind diese Entscheidungen mit gewissen Unsicherheiten behaftet, so daß sich nur Wahrscheinlichkeitsaussagen treffen lassen. Diese werden ausgedrückt durch eine Bewertungszahl Pi für die Wahrscheinlichkeit, daß sich das vorausfahrende Fahrzeug auf der eigenen Spur befindet, und eine Bewertungszahl Pa für die Wahrscheinlichkeit, daß sich das vorausfahrende Fahrzeug außerhalb der eigenen Fahrspur befindet. Soweit vorhanden können Zusatzinformationen, beispielsweise über die mit Hilfe eines Kamerasystems erfaßte Lage von Fahrbahnmarkierungen oder Ortungsdaten von am Fahrbahnrad aufgestellten Radar-Reflektoren zur Verbesserung der Genauigkeit genutzt werden.

Die Signale des Giergeschwindigkeitssensors 22 dienen in erster Linie dazu, auf Kurvenstrecken den voraussichtlichen gekrümmten Verlauf der eigenen Fahrspur vorherzusagen. Dazu wird aus der Giergeschwindigkeit und der gemessenen Fahrgeschwindigkeit der augenblickliche Krümmungsradius der von dem eigenen Fahrzeug durchfahrenen Bahn berechnet. In erster Näherung kann angenommen werden, daß der Verlauf der eigenen Fahrspur einem Kreisbogen mit diesem Radius entspricht. Zur Verfeinerung können Änderungen des Krümmungsradius beim Einfahren in eine Kurve oder beim Ausfahren aus einer Kurve zur Extrapolation benutzt werden, ggf. in Kombination mit den gemessenen Querbewegungen der vorausfahrenden Fahrzeuge.

Die Ortungsdaten des ausgewählten Zielobjektes werden zusammen mit der gemessenen Geschwindigkeit des eigenen Fahrzeugs an das ACC-Modul 10 weitergeleitet und bilden dort die Grundlage für die Geschwindigkeits- oder Abstandsregelung. Wenn ein Zielobjekt, also ein vorausfahrendes Fahrzeug, auf der eigenen Spur vorhanden ist, so wird erforderlichenfalls die Geschwindigkeit auf einen unter der vom Fahrer gewählten Wunschgeschwindigkeit liegenden Wert reduziert, so daß sichergestellt ist, daß das Zielobjekt in einem sicheren, geschwindigkeitsabhängigen Abstand verfolgt wird.

Durch ein Überwachungsmodul 24 wird anhand der gemessenen Ortungsdaten und anhand von bekannten und/oder gemessenen Betriebsparametern des Fahrzeugs fortlaufend überprüft, ob die Bedingungen für einen sicheren Betrieb des ACC-Systems nach wie vor gegeben sind. Wenn dies nicht der Fall ist, beispielsweise, wenn das verfolgte Zielobjekt so abrupt abbremst, daß die mit dem ACC-System maximal erreichbare Verzögerung des eigenen Fahrzeugs nicht ausreicht, den gewünschten Abstand einzuhalten, so daß ein aktives Eingreifen des Fahrers erforderlich ist, gibt es Überwachungsmodul 24 über einen Lautsprecher 26 eine Übernahmeaufforderung an den Fahrer aus. Diese Übernahmeaufforderung, die den Fahrer darauf hinweist, daß sein aktives Eingreifen in das Fahrgeschehen erforderlich ist, kann beispielsweise in einem charakteristischen Signalton bestehen. Sofern das Fahrzeug ein Navigationssystem mit Sprachausgabe aufweist, kann die Übernahmeaufforderung auch in einer gesprochenen Anweisung bestehen. Wahlweise oder zusätzlich kann die Übernahmeaufforderung auch durch ein optisches Signal gebildet werden, beispielsweise durch eine blinkende Kontrolleuchte auf dem Armaturenbrett oder dergleichen.

Figur 2 zeigt schematisch eine Richtungsfahrbahn mit zwei Fahrspuren 28, 30, die von einem mit dem ACC-System nach Figur 1 ausgerüsteten Fahrzeug 32 (auf der rechten Fahrspur 30) sowie von drei vorausfahrenden Fahrzeugen 34,36 und 38 befahren werden. Der Detektionsbereich 40 des Ortungssystems 16, d.h., der von der Radarkeule des Radarsensors überstrichene Bereich, ist schraffiert eingezeichnet. Alle drei vorausfahrenden Fahrzeuge 34, 36 und 38 befinden sich innerhalb des Detektionsbereichs 40, so daß ihre Ortungsdaten von dem Ortungssystem 16 erfaßt werden. Die Fahrzeuge 34 und 36 befinden sich auf der eigenen Fahrspur 30 des Fahrzeugs 32, während sich das Fahrzeug 38 auf der benachbarten Fahrspur 28 befindet. Unter diesen Bedingungen wird die Auswerteeinrichtung 18 das Fahrzeug 34 als Zielobjekt auswählen.

Man erkannt, daß der Detektionsbereich 40 fächerförmig vom Fahrzeug 32 ausgeht und erst ab einem Abstand, der etwa dem Abstand des Fahrzeugs 34 entspricht, eine Breite hat, die annähernd mit der Breite der Fahrspur 30 übereinstimmt. Innerhalb des Geschwindigkeitsbereiches, in dem das ACC-System normalerweise betrieben wird (z.B. oberhalb von 20 km/h) ist der übliche Sicherheitsabstand zwischen den Fahrzeugen und damit auch der Abstand zum Zielobjekt 34 so groß, daß das Zielobjekt auf jeden Fall im Detektionsbereich 40 liegt und somit sicher erfaßt werden kann. Wenn sich jedoch bei einem Verkehrsstau die Geschwindigkeiten der Fahrzeuge und auch die Abstände zwischen ihnen verringern, kann es bei einem gewissen Querversatz der Fahrzeuge innerhalb derselben Fahrspur vorkommen, daß das Zielobjekt aus dem Detektionsbereich 40 verschwindet. Dies wäre in Figur 2 beispielsweise bei der gestrichelt eingezeichneten Position 34' des Zielobjektes der Fall. Ohne zusätzliche Sicherheitsvorkehrungen würde dies dazu führen, daß die Auswerteeinrichtung 18 nun das Fahrzeug 36 als neues Zielobjekt auswählt und das ACC-Modul die Geschwindigkeit so regelt, daß das Fahrzeug 32 dichter auf das Fahrzeug 36 auffährt. Dabei könnte.es zu einer Kollision mit dem nicht.mehr erfaßten Fahrzeug in der Position 34' kommen.

Das erfindungsgemäße ACC-System ist nun so ausgelegt, daß es dennoch auch bei niedrigen Fahrzeuggeschwindigkeiten, bis hinab zur Geschwindigkeit 0, grundsätzlich in Betrieb bleibt. Zur Vermeidung der Kollisionsgefahr hat das Überwachungsmodul 24 die Funktion, Situationen wie die in Figur 2 durch die Position 34' dargestellte zu erkennen und bei Erkennung einer solchen gefahrenträchtigen Situation die Übernahmeaufforderung auszugeben.

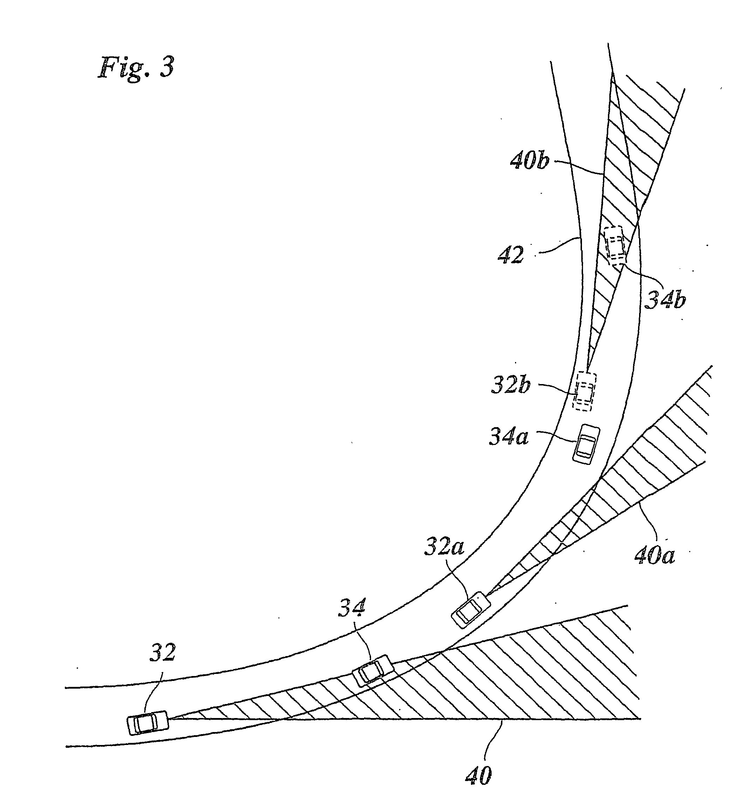

Weitere Situationen, die von dem Überwachungsmodul 24 erkannt werden, sind in Figur 3 illustriert. Diese Figur zeigt eine gekrümmte Fahrbahn 42. In fetten Linien sind die Positionen der Fahrzeuge 32 und 34 eingezeichnet, während sie in eine allmählich enger werdende Kurve einfahren. Aufgrund der Krümmung der Fahrbahn 42 ist das Fahrzeug 34 zum linken Rand des Erfassungsbereiches 40 ausgewandert. Dieses Auswandern wird von der.Auswerteeinrichtung 18 anhand der Änderung der zugehörigen Azimutwinkel verfolgt. Allein aufgrund dieser Azimutwinkel läßt sich jedoch nicht entscheiden, ob das Fahrzeug 34 in eine Kurve eingefahren ist oder einen Spurwechsel vorgenommen hat. Ergänzend zeigt jedoch das Signal des Giergeschwindigkeitssensors 22 an, daß auch das Fahrzeug 32 schon in die Kurve eingefahren ist. Dies deutet darauf hin, daß kein Spurwechsel vorliegt, daß also das Fahrzeug 34 nach wie vor auf derselben Spur wie das Fahrzeug 32 fährt. Aufgrund der fortdauernden Änderung des Azimutwinkels des Fahrzeugs 34 ist zu erwarten, daß dieses Fahrzeug beim weiteren Einfahren in die Kurve ganz aus dem Erfassungsbereich 40 bzw. 40a auswandern wird, wie durch die in dünneren Linien eingezeichneten Fahrzeugpositionen 32a und 34a illustriert wird. Auch in dieser Situation wird deshalb die Übernahmeaufforderung an den Fahrer ausgegeben werden. Dabei braucht nicht abgewartet zu werden, bis das Fahrzeug 34 tatsächlich den Detektionsbereich verlassen hat.

Die Positionen 32b und 34b in Figur 3 illustrieren eine Situation, bei der ähnlich wie in Figur 2 das vorausfahrende Fahrzeug aus dem Detektionsbereich verschwinden wird, wenn das mit dem ACC-System ausgestattete Fahrzeug 32 dichter auffährt. In Figur 3 wird aber das Zielobjekt auch bei unverändertem Abstand verlorengehen, weil die beiden Fahrzeuge wieder aus der Kurve ausfahren und dabei der Detektionsbereich 40b so verschwenkt wird, daß das vorausfahrende Fahrzeug nicht mehr erfaßt wird. Das Überwachungsmodul 24 erkennt anhand des Signals des Giergeschwindigkeitssensors 22, daß eine Linkskurve durchfahren wird, und anhand der Ortungsdaten, daß das Zielobjekt zum rechten Rand des Detektionsbereiches auswandert. Auch dies ist Anlaß für die Ausgabe einer Übernahmeaufforderung.

Weiterhin ist in Figur 3 zu erkennen, daß der Detektionsbereich 40a beim Durchfahren der Kurve überhaupt nur noch sehr wenig mit der befahrenen Fahrspur überlappt. Dieses Problem, das vorausfahrende Fahrzeuge in einer Kurve vorübergehend verlorengehen, tritt auch bei der normalen ACC-Regelung bei höherer Geschwindigkeit und größeren Fahrzeugabständen auf, ist dort jedoch weniger gravierend, weil die Kurvenradien von Schnellstraßen und Autobahnen im allgemeinen sehr groß sind und weil das vorausfahrende Fahrzeug mit Sicherheit wieder vom Radarkegel erfaßt wird, sobald die Fahrzeuge aus der Kurve ausfahren. Bei kleineren Geschwindigkeiten und Abständen und insbesondere bei Fahrten auf Landstraßen mit engeren Kurven kann dagegen der Fall eintreten, daß das vorausfahrende Fahrzeug in der Kurve verlorengeht und daß sich, noch bevor die Fahrzeuge wieder aus der Kurve ausfahren, der Abstand so weit verringert hat, daß das vorausfahrende Fahrzeug nun im toten Winkel außerhalb des Detektionsbereiches liegt. Bei niedriger Fahrzeuggeschwindigkeit ist es deshalb zweckmäßig, generell eine Übernahmeaufforderung auszugeben, wenn der gemessene Kurvenradius so klein ist, daß der Detektionsbereich keinen hinreichend großen Teil der eigenen Fahrspur mehr überdecken kann.

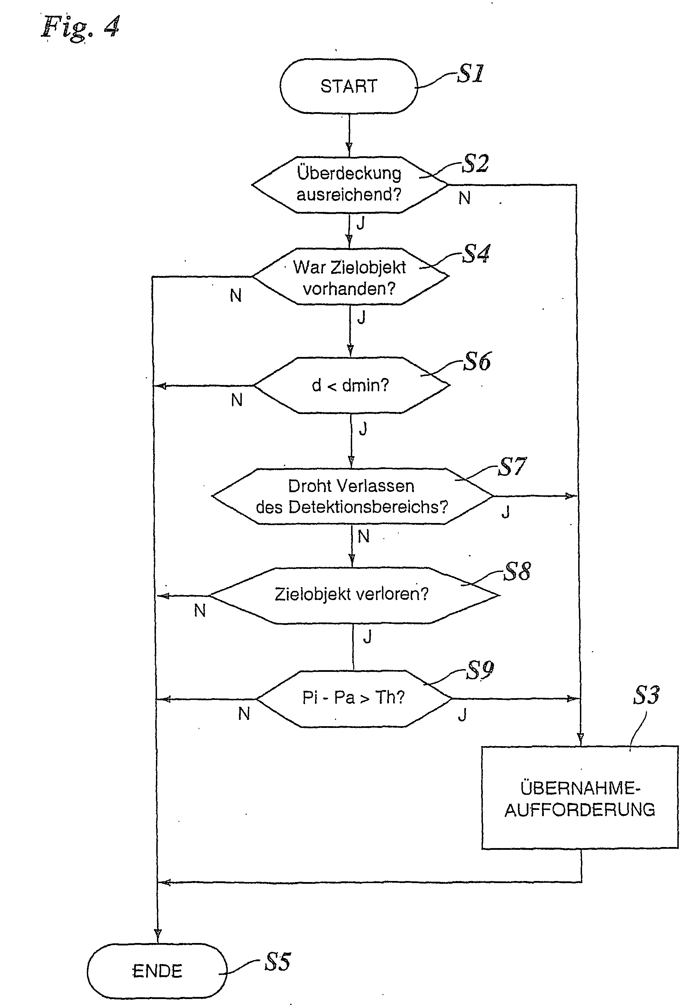

Figur 4 zeigt ein Flußdiagramm eines Beispiels für eine Überwachungsroutine, mit der die oben beschriebenen Funktionen des Überwachungsmoduls 24 implementiert werden können.
Die Überwachungsroutine wird periodisch aufgerufen (S1), beispielsweise mit einer Zykluszeit in der Größenordnung von einigen Millisekunden. Wahlweise kann der Aufruf der Überwachungsroutine unterbleiben, wenn die gemessene Geschwindigkeit des eigenen Fahrzeugs oberhalb eines vorgegebenen Wertes, beispielsweise oberhalb von 60 km/h liegt. In Schritt S2 wird anhand des mit Hilfe des Signals des Giergeschwindigkeitssensors 22 bestimmten Kurvenradius entschieden, ob der Detektionsbereich die eigene Fahrspur ausreichend überdeckt. Wenn dies nicht der Fall ist, ergeht unmittelbar die Übernahmeaufforderung (Schritt S3).
Wenn eine ausreichende Überdeckung vorhanden ist (Kurvenradius ist größer als ein bestimmter Schwellenwert), so wird in Schritt S4 anhand der zuvor von der Auswerteeinrichtung 18 übermittelten Ortungsdaten überprüft, ob im vorausgegangenen Zyklus der Überwachungsroutine noch ein Zielobjekt vorhanden war. Wenn dies nicht der Fall war, beispielsweise weil das Zielobjekt, das die Verringerung der Geschwindigkeit veranlaßt hatte, schon früher aufgrund eines Spurwechsels verloren wurde, so wird das Programm mit Schritt S5 beendet, ohne daß eine Übernahmeaufforderung erfolgt.

Wenn in Schritt S4 das Vorhandensein eines Zielobjektes festgestellt wurde, so wird in Schritt S6 überprüft, ob der zuletzt gemessene Abstand d dieses Zielobjektes zum eigenen Fahrzeug kleiner als ein bestimmter Wert dmin Wenn der Abstand d größer als dieser Wert ist, so ist der Detektionsbereich an der Stelle des Zielobjektes so breit, daß das Zielobjekt nur dann verlorengehen könnte, wenn es die eigene Fahrspur verläßt. Unter diesen Umständen ist keine Übernahmeaufforderung erforderlich, und das Programm wird wieder mit Schritt S 5 beendet. Der Wert dmin beträgt beispielsweise 20m, kann jedoch wahlweise auch in Abhängigkeit von dem in Schritt S2 berechneten Kurvenradius variiert werden.

Wenn ein kleinerer Abstand des Zielobjekts festgestellt wurde, wird in Schritt S7 anhand der von der Auswerteeinrichtung 18 übermittelten Ortungsdaten und zusätzlich anhand der Geschwindigkeits- und Giergeschwindigkeitsdaten überprüft, ob eine der in Figur 3 in fetten bzw. gestrichelten Linien illustrierten Situationen vorliegt, in denen ein Auswandern des Zielobjekts aus dem Erfassungsbereich droht. In diesem Fall erfolgt ein Sprung zu Schritt S3, und es wird die Übernahmeaufforderung ausgegeben.

Andernfalls wird in Schritt S8 überprüft, ob das Zielobjekt tatsächlich verlorengegangen ist. Wenn dies nicht der Fall ist, so kann dieses Zielobjekt weiter verfolgt werden, und das Programm wird ohne Übernahmeaufforderung mit Schritt S5 beendet.

Wurde das Zielobjekt hingegen verloren, so wird in Schritt S9 überprüft, ob die Differenz zwischen den oben erwähnten Bewertungszahlen Pi und Pa größer als ein bestimmter Schwellenwert Th ist. Wenn diese Differenz größer als der Schwellenwert ist, so bedeutet dies, daß das Zielobjekt, unmittelbar bevor es verloren wurde, sich mit größter Wahrscheinlichkeit auf der eigenen Fahrspur befunden hat, und es ist daher zu erwarten, daß es sich nach wie vor auf der eigenen Fahrspur befindet. Deshalb erfolgt in diesem Fall eine Verzweigung zu der Übernahmeaufforderung in Schritt S3. Wenn dagegen die Differenz zwischen Pi und Pa nicht größer als der Schwellenwert ist, so ist die Ursache für das Verschwinden des Zielobjektes darin zu sehen, daß das vorausfahrende Fahrzeug die Spur gewechselt hat. In diesem Fall kann somit die Geschwindigkeitsregelung fortgesetzt werden, und das Programm wird wieder ohne Übernahmeaufforderung mit Schritt S5 beendet.

In all den Fällen, in denen in Schritt S3 die Übernahmeaufforderung ausgegeben wurde, wird das Programm im Anschluß daran mit Schritt S5 beendet.

Obgleich die Bewertungszahlen Pi und Pa Maße für die Wahrscheinlichkeit sind, daß sich das Fahrzeug innerhalb oder außerhalb der eigenen Fahrspur befindet, brauchen diese Bewertungszahlen nicht so normiert zu sein, daß ihre Summe stets gleich 1 ist. Da für die Bestimmung der Bewertungszahlen Pi und Pa unter Umständen unterschiedliche Kriterien herangezogen werden, kann ihre Summe je nach Situation variieren. Statt die Differenz zwischen Pi und Pa auszuwerten, kann die Auswertung in Schritt S6 auch durch Bildung des Quotienten dieser Bewertungszahlen oder mit Hilfe irgendeines anderen Algorithmus erfolgen, der sicherstellt, daß eine direkte Verzweigung zu Schritt S5 nur dann erfolgt, wenn mit großer Sicherheit darauf geschlossen werden kann, daß das Zielobjekt die eigene Spur verlassen hat.

Eine weitere mögliche Abwandlung besteht darin, daß die Schritte S6 und S7 in ihrer Reihenfolge vertauscht werden.

Weiterhin können in Schritt S7 auch andere Kriterien dafür überprüft werden, daß ein Verlassen des Detektionsbereiches droht. Beispielsweise könnte ein solches Kriterium darin bestehen, daß das Zielobjekt bei gerader Fahrbahn einen von 0 verschiedenen Querversatz zum eigenen Fahrzeug aufweist, sich aber noch innerhalb der eigenen Fahrspur befindet (Überprüfung analog zu Schritt S9) und daß sich das Zielobjekt aufgrund der Abnahme des Abstands der linken oder rechten Grenze des Detektionsbereiches nähert.

Für die Entscheidung, ob das Zielobjekt die eigene Fahrspur verlassen hat (Schritt S9) kann ggf. auch die in der Vergangenheit gemessene Änderung des Querversatzes verfolgt und auf die Zukunft hochgerechnet werden.

An die Übernahmeaufforderung können sich in einer modifizierten Ausführungsform weitere Maßnahmen anschließen, mit denen sichergestellt wird, daß der Fahrer auch auf die Übernahmeaufforderung reagiert. Eine solche Maßnahme kann beispielsweise darin bestehen, daß nach Ablauf einer gewissen Wartezeit nach der Übernahmeaufforderung die Geschwindigkeit zwangsweise reduziert wird, sofern der Fahrer nicht inzwischen das Gaspedal oder die Bremse betätigt hat.

## Patentansprüche

1. Geschwindigkeitsregler mit Abstandsregelfunktion für Kraftfahrzeuge, mit einem Ortungssystem (16) zur Erfassung von Ortungsdaten für Objekte (34, 36, 38), die sich vor dem Fahrzeug (32) befinden, und mit einer Auswerteeinrichtung (18) zur Entscheidung, ob ein geortetes Objekt als relevantes Zielobjekt auf der eigenen Fahrspur (30) zu behandeln ist, **gekennzeichnet durch** ein Überwachungsmodul (24), das dazu ausgebildet ist, anhand der Ortungsdaten eine Situation zu erkennen, in der die Gefahr besteht, daß sich von dem Ortungssystem (16) nicht erfaßte Objekte (34'; 34a) im Nahbereich befinden, und in dieser Situation eine Übernahmeaufforderung (S3) an den Fahrer auszugeben.

2. Geschwindigkeitsregler nach Anspruch 1, **gekennzeichnet durch** eine Stop-Funktion, die bei Erfassung eines stillstehenden Zielobjektes so auf das Antriebssystem (12) und/oder das Bremssystem (14) des Fahrzeugs einwirkt, daß das Fahrzeug automatisch zum Stand gebremst wird.

3. Geschwindigkeitsregler nach Anspruch 1 oder 2, **dadurch gekennzeichnet, daß** die Auswerteeinrichtung (18) dazu ausgebildet ist, anhand der Ortungsdaten Bewertungszahlen (Pi, Pa) zu berechnen, die die Wahrscheinlichkeit dafür angeben, daß sich das Zielobjekt (34) auf der eigenen Fahrspur (30) befindet, und daß das Überwachungsmodul (24) bei einem drohenden oder eingetretenen Verlust des Zielobjektes aus dem Detektionsbereich (40; 40a; 40b) des Ortungssystems (16) anhand dieser Bewertungszahlen entscheidet, ob das Zielobjekt die eigene Fahrspur (30) verlassen hat oder ob es sich noch auf der eigenen Fahrspur befindet und eine Übernahmeaufforderung auszugeben ist.

4. Geschwindigkeitsregler nach Anspruch 3, **dadurch gekennzeichnet, daß** das Überwachungsmodul (24) die Übernahmeaufforderung nur dann ausgibt, wenn der Abstand (d) des Zielobjektes vom eigenen Fahrzeug kleiner als ein vorgegebener Grenzwert (dmin) ist.

5. Geschwindigkeitsregler nach einem der vorstehenden Ansprüche, **dadurch gekennzeichnet, daß** die Auswerteeinrichtung (18) anhand der Signale eines oder mehrerer Sensoren (20, 22) feststellt, ob das Fahrzeug (32) eine Kurve durchfährt, und den Kurvenradius berechnet, und daß das Überwachungsmodul (24) zusätzlich zu den Ortungsdaten auch den Kurvenradius auswertet.

6. Geschwindigkeitsregler nach den Ansprüchen 4 und 5, **dadurch gekennzeichnet, daß** das Überwachungsmodul (24) den Grenzwert (dmin) in Abhängigkeit vom Kurvenradius variiert.

7. Geschwindigkeitsregler nach Anspruch 5 oder 6, **dadurch gekennzeichnet, daß** das Überwachungsmodul (24) die Übernahmeaufforderung unabhängig von der Erfassung oder Nichterfassung eines Zielobjektes ausgibt, wenn der Kurvenradius kleiner als ein vorgegebener Wert ist.

8. Geschwindigkeitsregler nach einem der vorstehenden Ansprüche, **dadurch gekennzeichnet, daß** die Auswerteeinrichtung (18) aus den Ortungsdaten einen Querversatz des Zielobjektes (34) gegenüber dem Fahrzeug (32) berechnet und daß das Überwachungsmodul (24) unter Berücksichtigung der zeitlichen Änderung des Querversatzes entscheidet, ob das Zielobjekt die eigene Fahrspur (30) verlassen hat oder ob es sich noch auf der eigenen Fahrspur befindet und eine Übernahmeaufforderung auszugeben ist.

9. Geschwindigkeitsregler nach einem der vorstehenden Ansprüche, **dadurch gekennzeichnet, daß** das Ortungssystem (16) ein Radarsensor ist.

10. Geschwindigkeitsregler nach Anspruch 1, **gekennzeichnet durch** einen Lautsprecher (26) zur Ausgabe der Übernahmeaufforderung in der Form eines akustischen Signals.

## Claims

1. Speed regulator with distance regulating function for motor vehicles, having a locating system (16) for collecting locating data for objects (34, 36, 38) which are located in front of the vehicle (32), and having an evaluation device (18) for deciding whether a located object is to be treated as a relevant target object in the vehicle's own lane (30), **characterized by** a monitoring module (24) which is designed to use the locating data to detect a situation in which there is the risk of objects (34'; 34a) which are not sensed by the locating system (16) being located in the close range, and to output the control-resumption request (S3) to the driver in this situation.

2. Speed regulator according to Claim 1, **characterized by** a stop function which, when a stationary target object is sensed, acts on the drive system (12) and/or the brake system (14) of the vehicle in such a way that the vehicle is automatically braked to a standstill.

3. Speed regulator according to Claim 1 or 2, **characterized in that** the evaluation device (18) is designed to use the locating data to calculate evaluation numbers (Pi, Pa) which indicate the probability of the target object (34) being located in the vehicle's own lane (30), and **in that**, when there is a risk of the target object being lost from the detection range (40; 40a; 40b) of the locating system (16), or when said loss has occurred, the monitoring module (24) uses these evaluation numbers to decide whether the target object has left the vehicle's own lane (30) or whether it is still located in the vehicle's own lane and a control-resumption request should be output.

4. Speed regulator according to Claim 3, **characterized in that** the monitoring module (24) outputs the control-resumption request only if the distance (d) between the target object and the driver's own vehicle is less than a predefined limiting value (dmin).

5. Speed regulator according to one of the preceding claims, **characterized in that** the evaluation device (18) uses the signals of one or more sensors (20, 22) to determine whether the vehicle (32) is travelling through a bend, and calculates the radius of the bend, and **in that**, in addition to the locating data, the monitoring module (24) also evaluates the radius of the bend.

6. Speed regulator according to Claims 4 and 5, **characterized in that** the monitoring module (24) varies the limiting value (dmin) as a function of the radius of the bend.

7. Speed regulator according to Claim 5 or 6, **characterized in that** the monitoring module (24) outputs the control-resumption request independently of the sensing or non-sensing of a target object if the radius of the bend is less than a predefined value.

8. Speed regulator according to one of the preceding claims, **characterized in that** the evaluation device (18) calculates a lateral offset of the target object (34) with respect to the vehicle (32) from the locating data, and **in that** the monitoring module (24) decides, by taking into account the change in the lateral offset over time, whether the target object has left the vehicle's own lane (30) or whether it is still located in the vehicle's own lane and a control-resumption request should be output.

9. Speed regulator according to one of the preceding claims, **characterized in that** the locating system (16) is a radar sensor.

10. Speed regulator according to Claim 1, **characterized by** a loudspeaker (26) for outputting the control-resumption request in the form of an audible signal.

## Revendications

1. Régulateur de vitesse avec fonction de régulation de distance pour véhicules automobiles, comprenant un système de localisation (16) pour enregistrer des données de localisation pour des objets (34, 36, 38) situés devant le véhicule (32), et un dispositif d'exploitation (18) pour décider si un objet localisé doit être traité comme un objet cible intéressant sur la voie de circulation du véhicule (30),
**caractérisé par**
un module de surveillance (24) configuré pour détecter, à l'aide des données de localisation, une situation dans laquelle des objets (34' ; 34a) non enregistrés par le système de localisation (16) risquent de se trouver à proximité, et pour émettre dans cette situation une demande de reprise de contrôle (S3) à l'attention du conducteur.

2. Régulateur de vitesse selon la revendication 1,
**caractérisé par**
une fonction d'arrêt qui, lors de l'enregistrement d'un objet cible immobile, agit sur le système d'entraînement (12) et/ou sur le système de freinage (14) du véhicule de telle sorte que le véhicule freine automatiquement jusqu'à l'arrêt.

3. Régulateur de vitesse selon la revendication 1 ou 2,
**caractérisé en ce que**
le dispositif d'exploitation (18) est configuré pour calculer, à l'aide des données de localisation, des chiffres d'estimation (Pi, Pa) indiquant la probabilité que l'objet cible (34) se trouve sur la voie de circulation du véhicule (30), et
le module de surveillance (24), en cas de risque de perte ou de perte effective d'un objet cible hors de la zone de détection (40 ; 40a ; 40b) du système de localisation (15), décide à l'aide de ces chiffres d'évaluation si l'objet cible a quitté la voie de circulation du véhicule (30) ou s'il se trouve encore sur la voie de circulation du véhicule, et s'il doit émettre une demande de reprise de contrôle.

4. Régulateur de vitesse selon la revendication 3,
**caractérisé en ce que**
le module de surveillance (24) n'émet la demande de reprise de contrôle que lorsque la distance (d) entre l'objet cible et le véhicule est inférieure à une valeur limite prédéterminée (dmin).

5. Régulateur de vitesse selon l'une des revendications précédentes,
**caractérisé en ce que**
le dispositif d'exploitation (18) détermine, à l'aide des signaux d'un ou plusieurs capteur(s) (20, 22), si le véhicule (32) aborde un virage et calcule le rayon du virage, et
en plus des données de localisation le module de surveillance (24) exploite également le rayon du virage.

6. Régulateur de vitesse selon les revendications 4 et 5,
**caractérisé en ce que**
le module de surveillance (24) fait varier la valeur limite (dmin) en fonction du rayon du virage.

7. Régulateur de vitesse selon la revendication 5 ou 6,
**caractérisé en ce que**
le module de surveillance (24) émet la demande de reprise de contrôle indépendamment de l'enregistrement ou du non-enregistrement d'un objet cible, lorsque le rayon du virage est inférieur à une valeur prédéterminée.

8. Régulateur de vitesse selon l'une des revendications précédentes,
**caractérisé en ce que**
le dispositif d'exploitation (18) calcule, à partir des données de localisation, un décalage transversal de l'objet cible (34) par rapport au véhicule (32), et
le module de surveillance (24) décide, en prenant en compte la modification dans le temps du décalage transversal, si l'objet cible a quitté la voie de circulation du véhicule (30) ou s'il se trouve encore sur la voie de circulation du véhicule et s'il doit émettre une demande de reprise de contrôle.

9. Régulateur de vitesse selon l'une des revendications précédentes,
**caractérisé en ce que**
le système de localisation (16) est un détecteur radar.

10. Régulateur de vitesse selon la revendication 1,
**caractérisé par**
un haut-parleur (26) pour la restitution de la demande de reprise de contrôle sous la forme d'un signal acoustique.
